# EUROPEAN PATENT APPLICATION

(11) **EP 1 986 460 A1**
(43) Date of publication of application: **29.10.2008**
(21) Application number: 07300986.2
(22) Date of filing: 25.04.2007
(51) Int. Cl.: H04Q 7/38

(54) **System for speeding up synchronization in a call connection**

(71) Applicant: MOTOROLA, INC., Schaumburg, IL 60196 (US)
(72) Inventor: Marco, Olivier, 31400, Toulouse (FR); Peyrusse, Olivier, 31000, Toulouse (FR); Ulmer, Lionel, 31000, Toulouse (FR)
(74) Representative: Delumeau, François Guy

(57) **Abstract**

A global system for mobile communications (GSM) device (205) detects a frequency channel (FCH) signal received from a network neighbor cell (212) in an idle frame, and detects a synchronization channel (SCH) signal received from the network neighbor cell. The SCH signal is detected within the idle frame in which the FCH signal is detected. The GSM device (205) synchronizes the GSM wireless device with the network neighbor cell (212) based on the SCH signal.

## Description

### BACKGROUND

The invention relates to global system for mobile communication (GSM) networks. In particular, the invention relates to speeding up synchronization processes for a GSM device by performing frequency channel (FCH) and synchronization channel (SCH) detection in the same idle frame while in a call or in a packet transfer.

During traffic channel (TCH) operation or a temporary block flow (TBF) operation, fast synchronization of a wireless mobile station (MS) with new network cells is crucial to improve handover/reselection efficiency, by both reporting quickly to the network and synchronizing more cells. Transmission space is allocated by the GSM network for synchronization, but because of the limited transmission space, acquisition and decoding of the SCH and FCH needs to be efficient.

Idle frames are used to detect the FCH or decode the SCH. Conventionally, once the FCH is detected, the MS needs to wait 2 idle frames (240ms) when the FCH is not truncated (the FCH burst fits entirely in the idle frame), or 7 or 9 idle frames (840ms or 1080ms) when the FCH is truncated (only the end of the FCH burst was detected in the idle frame).

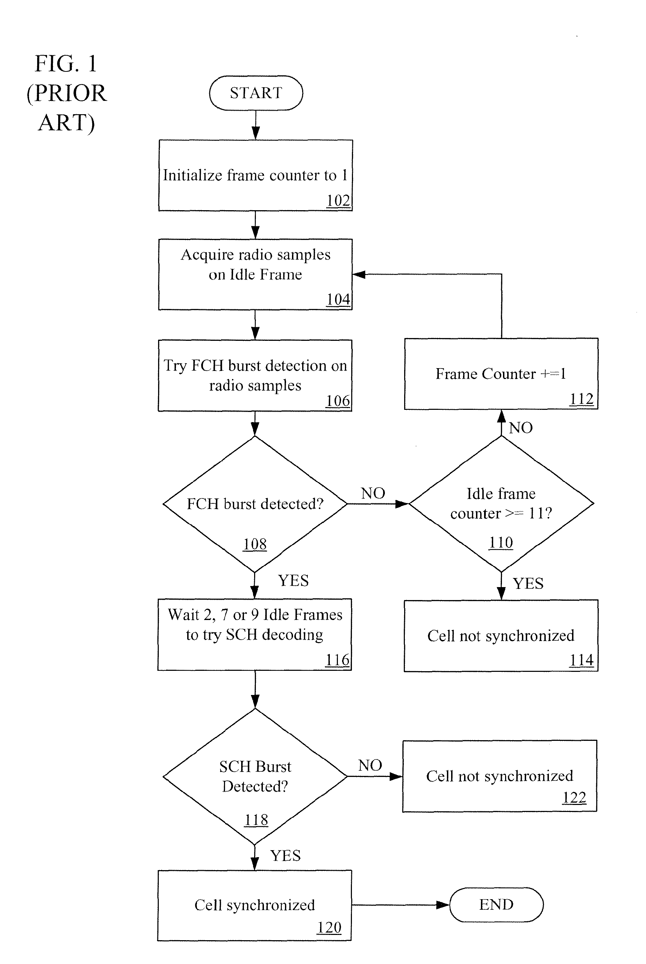

Conventionally, when an MS uses idle frames to synchronize neighboring cells, a single idle frame is either used to perform a frequency correction burst (FCB) detection or a SCH decoding, but not both. FIG. 1 illustrates a conventional synchronization process for a GSM wireless device. When starting the synchronization process for a new neighboring cell, an idle frame counter is initialized to 1, at step 102. The MS acquires radio samples on the BCH (beacon channel) frequency of the neighboring cell during an idle frame, at step 104. The MS attempts to detect an FCH burst on the radio samples, at step 106. The MS determines if an FCH burst is detected, at step 108. If no FCH burst is detected, the MS determines if the frame counter is greater than or equal to 11, at step 110. If the frame counter is less than 11, the frame counter is incremented by 1, at step 112, and the MS continues with step 104. If the frame counter is greater than or equal to 11, the MS is not synchronized with the neighbor cell, at step 114.

If an FCH burst is detected, at step 108, the MS waits 2 idle frames (240ms) when the FCH is not truncated, or 7 or 9 idle frames (840ms or 1080ms) when the FCH is truncated, at step 116. The MS then attempts to detect an SCH burst, at step 118. If the SCH burst is detected, at step 118, the cell is synchronized, at step 120. If the SCH burst is not detected, the MS is not synchronized with the neighbor cell.

### BRIEF DESCRIPTION OF THE DRAWINGS

Embodiments of the present invention are now described, by way of example only, with reference to the accompanying figures in which:

FIG. 1 illustrates a conventional synchronization process according to the prior art.

FIG. 2 illustrates an example GSM network.

FIG. 3 is a schematic block diagram of a GSM device.

FIG. 4 illustrates an example process for synchronizing a GSM device with a neighbor cell.

### DETAILED DESCRIPTION

The present disclosure is defined by the appended claims. This description summarizes some aspects of the present embodiments and should not be used to limit the claims.

While the present disclosure may be embodied in various forms, there are shown in the drawings and will hereinafter be described some exemplary and nonlimiting embodiments, with the understanding that the present disclosure is to be considered an exemplification of the disclosure and is not intended to limit the invention to the specific embodiments illustrated.

In this application, the use of the disjunctive is intended to include the conjunctive. The use of definite or indefinite articles is not intended to indicate cardinality. In particular, a reference to "the" object or "a and an" object is intended to denote also one of a possible plurality of such objects.

In one embodiment, an MS performs an SCH decoding in the same idle frame where an FCH is detected whenever possible. In another embodiment, an MS decodes the SCH based on FCH in-phase/quadrature (IQ) samples in the same periodic time window to synchronize second generation (2G) cells when a dual mode MS operates in third generation (3G) mode.

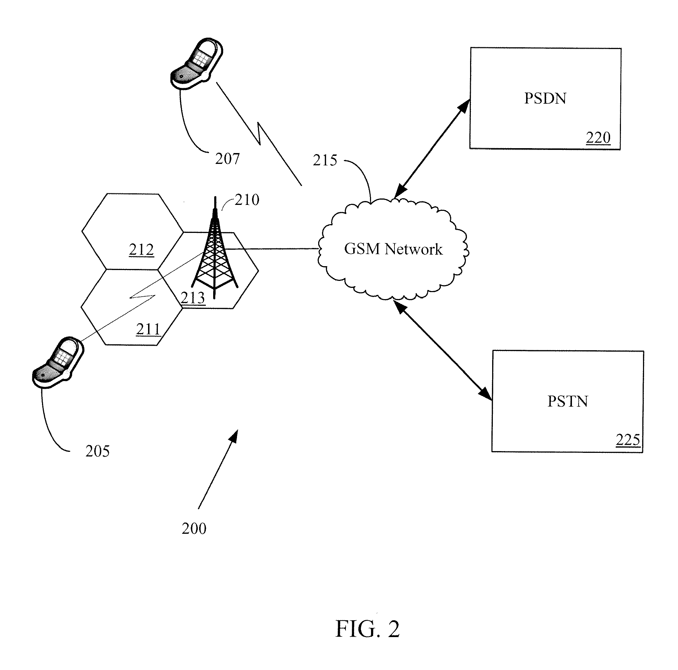

FIG. 2 is a schematic block diagram of a GSM wireless communications network 200. The network 200 includes a wireless mobile station (MS) 205, a base transceiver station BS 210, a GSM network 215, a Public Switched Data Network (PSDN) 220, and a Public Switched Telephone Network (PSTN) 225. The GSM network 215 includes a plurality of serving network neighbor cells 211, 212, 213.

The MS 205 may be a cellular telephone configured to operate with the GSM protocol, a 2G protocol, or other 3G protocol. The MS 205 may also be configured as a dual mode handset device, supporting both 2G and 3G using a single receiver. The MS 205 may include other devices such as MS 207 that transmit and receive data signals interoperable with the GSM protocol. The BS 210 contains radio frequency transmitters and receivers used to communicate directly with the MSs 205 and 207. In this type of cellular network, the MSs do not communicate directly with each other but communicate with the BSs 210.

The GSM network 215 includes components that connect the MS 205 and the BS 210 with other components, such as the PSDN 220 and the PSTN 225. The GSM network 215 includes support nodes, servers, and gateways operable to transmit the data carried within the GSM network 215 and between the MS 205 and the PSDN 220 and/or the PSTN 225.

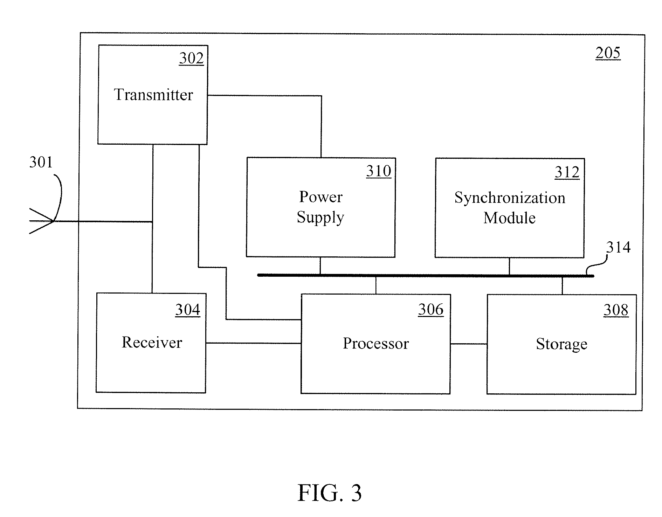

FIG. 3 illustrates a schematic block diagram of an example MS 205. The MS 205 includes an antenna 301, a transmitter 302, a receiver 304, a processor 306, a storage 308, a power supply 310, and a synchronization module 312. In an exemplary embodiment, the antenna 301 may be coupled to both the transmitter 302 and to the receiver 304, or the transmitter 302 and the receiver 304 may be connected to respective antenna units. In another exemplary embodiment, the processor 306, the storage 308, the power supply module 310, and the cell synchronization module 312 are to be coupled to each other through a communications bus 314. The communications bus 314 is operable to transmit control and communications signals from and between the components connected to the bus 314, such as power regulation, memory access instructions, and other system information. The processor 306 is coupled to the receiver 304, and the transmitter 302 is coupled to the receiver 304 and to the processor 306. One of skill in the art will appreciate that additional elements may be included in mobile station device. The MS 205 is configured to synchronize with a GSM network neighbor cell 211, 212, 213.

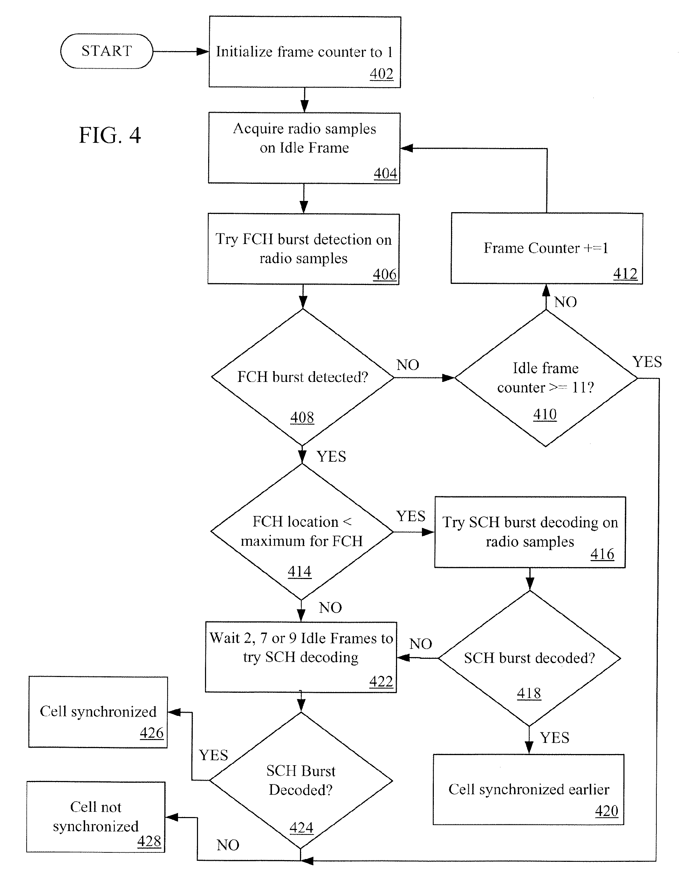

FIG. 4 illustrates example acts that synchronize the GSM device with a GSM network neighbor cell. The synchronization module 312 detects a frequency channel (FCH) signal in an idle frame received from the network neighbor cell (211, 212, 213). The synchronization module 312 then detects a synchronization channel (SCH) signal received from the network neighbor cell, where the SCH signal is detected within the same idle frame in which the FCH signal is detected. When starting the synchronization process for a new neighboring cell, the synchronization module 312 initializes an idle frame counter to 1, at step 402. The synchronization module 312 acquires radio samples on BCH (beacon channel) frequency of the neighboring cell, at step 404, such as IQ samples, during an idle frame while in TCH or TBF operation. The synchronization module 312 attempts to detect an FCH burst from the radio samples, at step 406. If the synchronization module 312 does not detect an FCH burst, at step 408, the synchronization module 312 determines if an idle frame counter is less than 11, at step 410. If the idle frame counter is greater than or equal to 11, the MS 205 is not synchronized with the network neighbor cell, at step 428. When the idle frame counter is less than 11, the idle frame counter is incremented by 1, at step 412, and the synchronization module 312 attempts to acquire radio samples on the idle frame, at step 404.

If the synchronization module 312 detects the FCH burst, at step 408, the synchronization module 312 determines whether a location of the FCH in the idle frame is less than a maximum FCH location for the frame, at step 414. The FCH burst may be located anywhere in the idle frame. The maximum frame location for the FCH signal is such that a next SCH signal fits into the reception radio window opened for the FCH detection. The next SCH signal occurs about 4.615ms (5000 quarter bits) later than the FCH signal within the reception radio window.

The synchronization module 312 attempts to acquire and decode an SCH burst on radio samples acquired during the FCH burst detection (e.g., 5000 quarter bits after the FCH location), at step 416. The synchronization module 312 may use the same IQ samples acquired during the FCH burst detection. The SCH signal may be detected using part of the IQ samples acquired during FCH detection, the part of the IQ samples used being placed about 4.615ms (5000 quarter bits) after the IQ samples corresponding to the detected FCH. If the synchronization module 312 decodes the SCH burst, the synchronization module 312 has then synchronized the network neighbor cell earlier, at step 420, and the GSM network 315 can hand off the MS 205 to the network neighbor cell earlier if needed. If the synchronization module 312 does not decode the SCH burst, at step 418, the synchronization module 312 waits 2 idle frames if the FCH burst is not truncated, or 7 or 9 idle frames if the FCH burst is truncated, before attempting to decode the SCH, at step 422. The synchronization module 312 then decodes the detected SCH burst, at step 424. If the SCH is decoded, the MS 205 is synchronized with the network neighbor cell, at step 426. If the SCH is not decoded, the MS 205 is not synchronized with the network neighbor cell, at step 428.

In another embodiment, a dual mode handset (e.g. supporting both 2G and 3G using a single receiver) synchronizes both 2G and 3G network neighbor cells. When a dual mode handset operates in 3G, it needs to synchronize 2G cells (just as when the 2G handset is in a call). For this, the 3GPP (3rd Generation Partnership Project) specifications reserve periodic time windows, equivalent to the "idle frame" of 2G. This is designated as a "compressed mode gap" when operating in 3G DCH (dedicated channel) and "FACH (forward access channel) Measurement Occasions" (FMO) when operating in 3G FACH mode. In an embodiment, the synchronization module 312 is configured to decode the SCH based on FCH IQs samples in the same reserved time window (compressed mode gap or FMO).

The method shown in FIG. 4 may be encoded in a signal bearing medium, a computer readable medium such as a memory, programmed within a device such as one or more integrated circuits, or processed by a controller or a computer. If the methods are performed by software, the software may reside in a memory resident to or interfaced to the MS 205, a communication interface, or any other type of nonvolatile or volatile memory interfaced or resident to the GSM network 215 or MS 205. The memory may include an ordered listing of executable instructions for implementing logical functions. A logical function may be implemented through digital circuitry, through source code, through analog circuitry, or through an analog source such as through an analog electrical, audio, or video signal. The software may be embodied in any computer-readable or signal-bearing medium, for use by, or in connection with an instruction executable system, apparatus, or device. Such a system may include a computer-based system, a processor-containing system, or another system that may selectively fetch instructions from an instruction executable system, apparatus, or device that may also execute instructions.

A "computer-readable medium," "machine-readable medium," "propagated-signal" medium, and/or "signal-bearing medium" may comprise any module that contains, stores, communicates, propagates, or transports software for use by or in connection with an instruction executable system, apparatus, or device. The machine-readable medium may selectively be, but not limited to, an electronic, magnetic, optical, electromagnetic, infrared, or semiconductor system, apparatus, device, or propagation medium. A non-exhaustive list of examples of a machine-readable medium include: an electrical connection having one or more wires, a portable magnetic or optical disk, a volatile memory such as a Random Access Memory "RAM" (electronic), a Read-Only Memory "ROM" (electronic), an Erasable Programmable Read-Only Memory (EPROM or Flash memory) (electronic), or an optical fiber (optical). A machine-readable medium may also include a tangible medium upon which software is printed, as the software may be electronically stored as an image or in another format (e.g., through an optical scan), then compiled, and/or interpreted or otherwise processed. The processed medium may then be stored in a computer and/or machine memory.

While the principles of the invention have been described above in connection with specific apparatus, it is to be clearly understood that this description is made only by way of example and not as a limitation on the scope of the invention. It is therefore intended that the foregoing detailed description be regarded as illustrative rather than limiting, and that it be understood that it is the following claims, including all equivalents, that are intended to define the spirit and scope of this invention.

## Claims

1. A method for synchronizing a global system for mobile communications (GSM) wireless device (205) with a network neighbor cell (211, 212, 213), the method comprising:
detecting (408) a frequency channel (FCH) signal received from the network neighbor cell in an idle frame;
detecting (416) a synchronization channel (SCH) signal received from the network neighbor cell, wherein the SCH signal is detected within the idle frame in which the FCH signal is detected; and
synchronizing (420) the GSM wireless device (205) with the network neighbor cell based on the SCH signal.

2. The method of claim 1, further comprising decoding the FCH signal.

3. The method of claim 1 or 2, further comprising decoding (416) the SCH signal.

4. The method of claim 3, wherein decoding the SCH signal comprises using in-phase/quadrature (IQ) samples acquired during FCH detection.

5. The method of anyone of claims 1 to 4, wherein detecting the FCH signal comprises acquiring in-phase/quadrature (IQ) samples by opening a reception radio window fits within an idle frame.

6. The method of anyone of claims 1 to 5, wherein detecting the SCH signal comprises (414) determining if a location of the detected FCH signal within the idle frame is less than a maximum frame location for the FCH signal within the idle frame.

7. The method of claim 6, wherein the maximum frame location for the FCH signal is such that a next SCH signal fits into the reception radio window opened for the FCH detection.

8. The method of claim 7, wherein the next SCH signal occurs about 4.615ms later than the FCH signal within the reception radio window.

9. The method of claim 6, wherein detecting the SCH signal comprises using part of the IQ samples acquired during FCH detection, the part of the IQ samples used being placed about 4.615ms after the IQ samples corresponding to the detected FCH.

10. The method of claim 6, wherein detecting the SCH signal comprises waiting a determined number of idle frames before attempting to detect the SCH signal when the location of the FCH signal within the idle frame is greater than the maximum frame location for the SCH signal within the idle frame.

11. The method of claim 10, wherein waiting the determined number of idle frames comprises waiting two idle frames when the FCH signal is not truncated, wherein the FCH signal fits entirely into the reception radio window.

12. A global system for mobile communications (GSM) device, comprising a synchronization module (312) operable to:
detect a frequency channel (FCH) signal received from a network neighbor cell in an idle frame;
detect a synchronization channel (SCH) signal received from the network neighbor cell, wherein the SCH signal is detected within the idle frame in which the FCH signal is detected; and
synchronize the GSM wireless device with the network neighbor cell based on the SCH signal.

13. The GSM device of claim 12, wherein the synchronization module (312) is further operable to decode the FCH signal.

14. The GSM device of claim 12, wherein the synchronization module (312) is further operable to decode the SCH signal.

15. The GSM device of claim 14, wherein the synchronization module (312) uses in-phase/quadrature (IQ) samples acquired during FCH detection to decode the SCH signal.

16. The GSM device of claim 12, wherein the synchronization module (312) acquires in-phase/quadrature (IQ) samples by opening a reception radio window that fits within an idle frame.

17. The GSM device of claim 12, wherein the synchronization module (312) is operable to determine if a location of the FCH signal within the idle frame is less than a maximum frame location for the SCH signal within the idle frame.

18. The GSM device of claim 17, wherein the synchronization module (312) is further operable to wait a determined number of idle frames before attempting to detect the SCH signal when the location of the FCH signal within the idle frame is greater than the maximum frame location for the SCH signal within the idle frame.

19. The GSM device of claim 18, wherein the determined number of idle frames comprises two idle frames when the FCH signal is not truncated, wherein the FCH signal entirely fits in the reception radio window.

20. A wireless communication device configured to interface with a second generation (2G) wireless network and a third generation (3G) wireless network, the 2G wireless network including a 2G neighboring cell and the 3G wireless network including a 3G serving cell, the wireless communication device comprising:
a synchronization module (312) operable to:
detect a frequency channel (FCH) signal based on radio samples acquired during a periodic time window allocated by the 3G wireless network;
detect a synchronization channel (SCH) signal received from the network neighbor cell, wherein the SCH signal is detected within the periodic time window in which the FCH signal is detected using the acquired radio samples; and
synchronize the GSM wireless device with the 2G network neighbor cell based on the SCH signal.

21. The wireless communication device of claim 20, wherein the periodic time window comprises a compressed mode gap when the wireless communication device operates in a 3G dedicated channel.

22. The wireless communication device of claim 20, wherein the periodic time window comprises a forward access channel measurement occasion when the wireless communication device operates in a 3G forward access channel mode.
